# EUROPEAN PATENT APPLICATION

(11) **EP 4 836 583 A1**
(43) Date of publication of application: **04.11.2026**
(21) Application number: 25220264.3
(22) Date of filing: 02.12.2025
(51) Int. Cl.: H05B 1/02, H05B 6/06

(54) **HEATING COOKING SYSTEM**

(30) Priority: 02.05.2025 KR 20250058422
(71) Applicant: Cuckoo Electronics Co., Ltd., Yangsan-si, Gyeongsangnam-do 50592 (KR)
(72) Inventor: LEE, Young Su, 50592 Gyeongsangnam-do (KR); LEE, Jong Hun, 50592 Gyeongsangnam-do (KR); DO, Min, 50592 Gyeongsangnam-do (KR); LEE, Jae Hwan, 50592 Gyeongsangnam-do (KR); HEO, Jun Seok, 50592 Gyeongsangnam-do (KR)
(74) Representative: Müller Hoffmann & Partner

(57) **Abstract**

A heating cooking system including a main body with a receiving space and a top plate that covers an upper side of the receiving space is provided. The heating cooking system includes: a display; an input part; a power supply part that receives external power and applies the same to the heating part and the control part; the heating part that heats cookware placed on the top plate under the control of the control part; a microphone that captures sound and applies a sound signal to a sound analysis part; the sound analysis part that infers temperatures from the sound signal applied from the microphone, includes the temperature with the highest match rate in the analysis information and applies the same to the control part; and the control part that controls the heating part to start a heating operation at a first heating power level in response to a selection input from the input part, and receives the analysis information from the sound analysis part, wherein the control part performs a boil-over prevention function to control the display or the heating part using the analysis information upon first receiving the analysis information including a temperature that falls within a first determination temperature range which is lower than a second determination temperature range.

## Description

### [Technical Field]

The present disclosure relates to a heating cooking system, and more particularly, to a heating cooking system capable of analyzing sounds generated while food is being heated to determine the temperature of the food and thereby adjust the heating power.

### [Background Art]

In general, an induction heating cooker is a cooking device that heats cookware using the principle of induction heating. The induction heating cooker includes a top plate (or cooktop) where cookware is placed, and an induction heating coil which is a heating part that creates a magnetic field when an electrical current is applied.

When a magnetic field is created by the electric current applied to the induction heating coil, it induces a secondary current in the cookware and Joule heat is produced by the electrical resistance of the cookware itself. The cookware and the food contained in the cookware are heated by the Joule heat.

An induction heating cooker according to the related art includes a main body with a receiving space, a top plate that covers an upper side of the receiving space, and where cookware is placed, a heating part (e.g., a hollow annular induction heating coil or the like) formed on a bottom surface of the top plate and a temperature sensing part located above the hollow portion of the heating part and on the bottom surface of the top plate (a bottom surface of a heating area).

Conventionally, the temperature sensing part detects the temperature of the top plate. Since it indirectly measures the temperature of the cookware placed on the heating area of the top plate, there is a significant error between the measured temperature and the temperature of the food in the cookware, and a measurement time delay occurs.

As another embodiment of the conventional temperature sensing part, a probe-type thermometer may be used, which is either placed inside or inserted into cookware to directly measure the temperature of the food. Although the induction heating cooker can adjust its heating power based on the temperature measured by the probe-type thermometer, it requires the user to manually insert and install the probe-type thermometer into the cookware, which is inconvenient.

### [Disclosure]

### [Technical Problem]

The present disclosure aims to providing a heating cooking system capable of analyzing the sounds generated while food is being heated to determine the temperature of the food and thereby adjust the heating power.

### [Technical Solution]

The present disclosure provides a heating cooking system including a main body with a receiving space and a top plate that covers an upper side of the receiving space, the heating cooking system including: a display; an input part; a power supply part that receives external power and applies the same to the heating part and the control part; the heating part that heats cookware placed on the top plate under the control of the control part; a microphone that captures sound and applies a sound signal to a sound analysis part; the sound analysis part that infers temperatures from the sound signal applied from the microphone, includes the temperature with the highest match rate in the analysis information and applies the same to the control part; and the control part that controls the heating part to start a heating operation at a first heating power level in response to a selection input from the input part, receives the analysis information from the sound analysis part, wherein the control part performs a boil-over prevention function to control the display or the heating part using the analysis information, upon first receiving the analysis information including a temperature that falls within a first determination temperature range which is lower than a second determination temperature range.

### [Advantageous Effects]

The present disclosure can analyze the sound made while food is being heated to more quickly determine the temperature of the food, minimize the impact of external noise by controlling the heating power by checking for a gradual increase in the temperature of the food and, and prevent the food from boiling over while keeping the food boiling by lowering the heating power based on the determined temperature of the food.

### [Description of Drawings]

FIG. 1 is a control configuration diagram of a heating cooking system according to the present disclosure.
FIG. 2 is a control flowchart of the heating cooking system of FIG. 1.

### [Mode for Invention]

Hereinafter, the present disclosure will be described in detail with reference to the drawings.

A food subject to boil-over prevention in the present disclosure includes water (plain water without any added substances) and broth-based dishes containing water. It is a type of food that can reach a boiling state within a first temperature range (for example, 80 to 120°C) when heated.

When the temperature of the food reaches approximately 80°C at a pressure of 1 atmosphere, the food begins to boil, producing fine bubbles and steam, which in turn generates sound. As the temperature of the food continues to rise due to heating after the food begins to boil, the sound produced by the boiling of the food changes accordingly. This disclosure utilizes the fact that the sound generated by the boiling of the food corresponds to the temperature of the food.

The heating cooking system according to the present disclosure includes a main body with a receiving space, and a top plate that covers an upper side of the receiving space, and where cookware is placed.

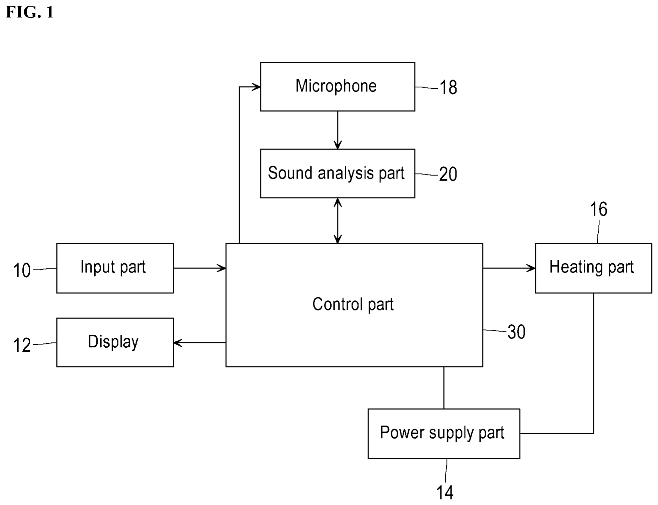

FIG. 1 is a control configuration diagram of a heating cooking system according to the present disclosure.

The heating cooking system includes: an input part 10 mounted on the main body or the top plate, that receives a user input (e.g., power on/off, heating zone selection, heating power level selection, boil-over prevention function selection, etc.) and applies it to a control part 30, a display 12 mounted on the main body or the top plate, that visually or audibly displays the heating cooking system's status or operation (e.g., cooking process details, food temperature, boiling state, etc.), a power supply part 14 that receives external power and applies the power to a heating part 16, the control part 30, etc., the heating part 16 mounted in the receiving space of the main body, that heats cookware placed on the top plate under the control of the control part 30, a microphone 18 mounted in the receiving space, spaced a certain distance apart from a lower side of the top plate, that captures sound and applies a sound signal to a sound analysis part 20, the sound analysis part 20 mounted in the receiving space, spaced a certain distance apart from the lower side of the top plate, that receives a sound signal from the microphone 18 and applies analysis information including at least the temperature of the food to the control part 30, and the control part 30 mounted in the receiving space of the main body, that controls the aforementioned components and performs not only a general heating function but also a boil-over prevention function. It is to be noted that the input part 10, the display 12, the power supply part 14, the microphone 18, etc. are considered technologies that are readily recognized by a person skilled in the art to which the present disclosure pertains, and thus detailed descriptions thereof will be omitted.

First, the heating part 16 may include a heating element for resistive heating or a heating element for induction heating. The heating part 16 for resistive heating is installed under the top plate and generates resistive heat under the control of the control part 30. The generated resistive heat is transferred through the top plate to the cookware, thereby heating the cookware. Additionally, the heating part 16 for induction heating is formed under the top plate, spaced a certain distance apart from the bottom surface of the top plate, and generates an alternating magnetic field under the control of the control part 30, enabling induction heating of the cookware placed on the top plate.

Moreover, the sound analysis part 20 receives a sound signal in the time domain as input and infers the temperature of the food being cooked. The inferred temperature of the food is then applied to the control part 30 as analysis information. Here, the sound analysis part 20 functions as an artificial intelligence module, and may be implemented as a sound analysis executor that performs computations based on a sound analysis algorithm that performs machine learning using RNN, LSTM, CNN, DNN, or other models to output the analysis information.

The sound analysis algorithm may include a Fast Fourier Transform (FFT) that converts a sound signal in the time domain to a sound signal in the frequency domain. The sound analysis algorithm receives sound signals as input at various temperatures under various conditions, converts the input sound signals into frequency-domain sound signals, and performs machine learning on the frequency and intensity spectrum of the frequency-domain sound signals. The various conditions may include, for example, type (material, shape, etc.) of cookware, heating power level, quantity of food, and operation of other household appliances around the heating cooking system. The various temperatures may include first to third temperatures(e.g., 80°C, 90°C, 100°C) within a temperature determination region. Through this learning process, the sound analysis algorithm may receive a sound signal as input and infer the temperature of the food being cooked that corresponds to the frequency and intensity spectrum of the input sound signal.

The control part 30 does not require all temperatures of the food from the sound analysis part 20 to control the heating part 16 but it requires the temperature of the food only within a temperature range that necessitates control (e.g., 80 to 100°C). This temperature range requiring heating control on the food corresponds to the temperature determination region. The sound analysis algorithm may generate analysis information including the inferred temperature of the food only when the inferred temperature of the food falls within the temperature determination range - for example, only when the inferred temperature of the food is any one of the first to third temperatures - and then apply the analysis information to the control part 30.

In addition to inferring the temperature of the food, the sound analysis algorithm may also analyze the frequency and intensity spectrum of the sound signal to infer the match rate between the sound signal and the temperature, which is the probability that the temperature of the food corresponds to each of the first to third temperatures. For example, the sound analysis algorithm may infer that the match rate between the sound signal and the second temperature is 20% and the match rate between the sound signal and the third temperature is 85%.

As a first embodiment of the analysis information, the sound analysis part 20 may apply the analysis information to the control part 30 in such a manner that the analysis information either includes only the temperature with the highest of the match rates between the sound signal and the first to third temperatures, as the temperature of the food, or includes both the temperature with the highest match rate and the match rate between the sound signal and that temperature.

Alternatively, as a second embodiment of the analysis information, the sound analysis part 20 may apply the analysis information to the control part 30 in such a manner that the analysis information either includes only a temperature with a match rate equal to or greater a reference match rate (e.g., 90%), among the match rates between the sound signal and the first to third temperatures, as the temperature of the food, or includes both such a temperature and the match rate between the sound signal and that temperature.

Alternatively, as a third embodiment of the analysis information, the sound analysis part 20 may apply the analysis information to the control part 30 in such a manner that the analysis information includes the first to third temperatures and the respective match rates between the sound signal and the first to third temperatures.

As well as a general heating function for controlling the heating power of the heating part 16 by selecting a heating power level via the input part 100, the control part 30 receives analysis information from the sound analysis part 20 and performs a boil-over prevention function using the temperature of the food included in the analysis information. The boil-over prevention function will be described in detail below.

If the analysis information includes only one temperature, as in the above-described first and second embodiments of the analysis information, or if the analysis information includes a food temperature with a match rate equal to or greater than a reference match rate (e.g., 90%) and the match rate of that temperature, the control part 30 performs the boil-over prevention function using the temperature of the food included in the analysis information.

Alternatively, as in the above-described first embodiment of the analysis information, if the analysis information includes one temperature and the match rate of that temperature, the control part 30 performs the boil-over prevention function using the temperature of the food included in the analysis information only if the match rate of that temperature is equal to or greater than a reference match rate.

Alternatively, as in the above-described third embodiment of the analysis information, the control part 30 receives analysis information including first to third temperatures and their respective match rates, and performs the boil-over prevention function using the temperature with the highest match rate or a temperature with a match rate equal to or greater than a reference match rate. Alternatively, the control part 30 receives analysis information including first to third temperatures and their respective match rates, and if one of the temperatures is equal to or greater the reference match rate and the match rates of the other temperatures are equal to or less than the lowest match rate (e.g., 10%), then performs the boil-over prevention function using the temperature with a match rate equal to or greater than the reference match rate.

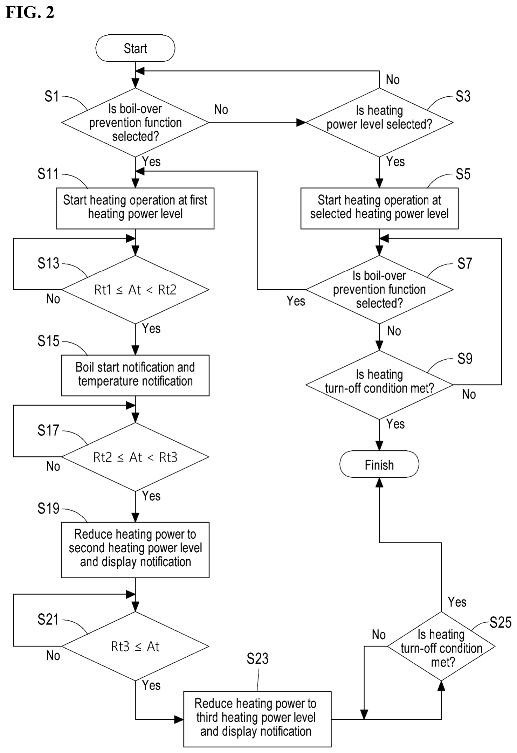

FIG. 2 is a control flowchart of the heating cooking system of FIG. 1.

In an initial stage, the control part 30 or the like receives power from the power supply part 14 and is in standby mode.

First, in step S1, the control part 30 checks whether a selection input for the boil-over prevention function has been received from the input part 10. If the selection input for the boil-over prevention function has been received, the control part 30 proceeds to step S11; otherwise, it proceeds to step S3.

In step S3, the control part 30 checks whether a selection input for the heating power level has been received from the input part 10. If the selection input for the heating power level has been received, the control part 30 proceeds to step S5; otherwise, it proceeds to step S1.

In step S5, the control part 30 controls the heating part 16 to start a heating operation at the selected heating power level. While performing the heating operation, the control part 30 proceeds to step S7.

In step S7, the control part 30 checks whether a selection input for the boil-over prevention function has been received from the input part 10. If the selection input for the boil-over prevention function has been received, the control part 30 proceeds to step S11; otherwise, it proceeds to step S9.

In step S9, the control part 30 determines whether a heating turn-off condition is met. The control part 30 determines that the heating turn-off condition is met if a selection input from the input part 10 is a selection input for [Level 0] heating power or a selectin input for [Power Off], or if a preset cooking time has elapsed. Upon determining that the heating turn-off condition is met, the control part 30 ends the control process; otherwise, it proceeds to step S7 while continuing the heating operation.

In step S11, the control part 30 controls the heating part 16 to start a heating operation at a first heating power level. Here, the first heating power level is set to a maximum output (e.g., 2400W). In step S11, the control part 30 controls the microphone 18 and the sound analysis part 20 so that they operate individually, and the microphone 18 captures sound and applies a sound signal to the sound analysis part 20. The sound analysis part 20 analyzes the applied sound signal and generates analysis information including the inferred temperature of the food only if the inferred temperature of the food falls within a temperature determination region and applies the analysis information the control part 30. The control part 30 proceeds to step S13 while performing the heating operation and sound signal analysis of step S11.

In step S13, the control part 30 determines whether a temperature At included in the analysis information received from the sound analysis part 20 is equal to or greater than a first reference temperature Rt1 and less than a second reference temperature Rt2. Here, the first reference temperature Rt1 is a temperature at which the food begins to boil-e.g., 80°C-and the second reference temperature Rt2 is set between a third reference temperature Rt3, which is a boiling point (e.g., 100°C at 1 atm), and the first reference temperature Rt1-e.g., 90°C. If the temperature At included in the analysis information is equal to or greater than the first reference temperature Rt1 and less than the second reference temperature Rt2, the control part 30 proceeds to step S15; otherwise, it discards the temperature At included in the analysis information and repeatedly performs step S13 while continuing the heating operation and sound signal analysis of step S11.

In step S15, the control part 30 visually or audibly displays a boil-start notification via the display 12. Here, the boil-start notification may include, for example, a message such as "The food is starting to boil." Additionally, the control part 30 may also display the temperature At included in the analysis information either visually or audibly via the display 12. After performing step S15, the control part proceeds to step S17.

In step S17, the control part 30 determines whether the temperature At included in the analysis information received from the sound analysis part 20 is equal to or greater than the second reference temperature Rt2 and less than the third reference temperature Rt3. If the temperature At included in the analysis information received from the sound analysis part 20 is equal to or greater than the second reference temperature Rt2 and less than the third reference temperature Rt3, the control part 30 proceeds to step S19; otherwise, it discards the temperature At included in the analysis information and repeatedly performs step S17 while continuing the heating operation and sound signal analysis of step S11.

In step S19, the control part 30 controls the heating part 16 to start a heating operation at a second heating power level which is lower than the first heating power level. Here, the second heating power level is set to 1500W, for example. Additionally, the control part 30 visually or audibly displays a heating power reduction notification (e.g., "The food has started boiling, and the heating power will be adjusted") via the display 12. The control part 30 may also visually or audibly display the temperature At included in the analysis information via the display 12. The control part 30 proceeds to step S21 while performing the heating operation at the second heating power level of step S19.

In step S21, the control part 30 determines whether the temperature At included in the analysis information received from the sound analysis part 20 is equal to or greater than the third reference temperature Rt3. If the temperature At included in the analysis information received from the sound analysis part 20 is equal to or greater than the third reference temperature Rt3, the control part 30 proceeds to step S23; otherwise, it discards the temperature At included in the analysis information and repeatedly performs step S21 while continuing the heating operation and sound signal analysis of step S19.

In step S23, the control part 30 controls the heating part 16 to start a heating operation at a third heating power level which is lower than the second heating power level. Here, the third heating power level is set to 800W, for example. Additionally, the control part 30 visually or audibly displays a heating power reduction notification (e.g., "The food is boiling, and the heating power will be adjusted to prevent it from boiling over") via the display 12. The control part 30 may also visually or audibly display the temperature At included in the analysis information via the display 12. The control part 30 proceeds to step S25 while performing the heating operation at the third heating power level of step S23.

In step S25, the control part 30 determines whether the heating turn-off condition is met in the same manner as in step S9. If the heating turn-off condition is determined to be met, the control part 30 ends the control process; otherwise, it repeatedly performs step S25 while continuing the heating operation of step S23.

The above-described steps S3, S5, and S9 represent a general heating function performed by a typical heating cooking system. In the heating cooking system of the present disclosure, even while performing the general heating function, step S7 may be performed to allow the boil-over prevention function to be selected by the user, so that, if selected by the user, the boil-over prevention function is performed.

As described in steps S13, S17, and S21, the control part 30 sequentially performs steps S15, S19, and S23 only when the temperature At included in the analysis information increases in stages - for example, only when the temperature At falls within a first determination temperature range equal to or greater than the first reference temperature Rt1 and less than the second reference temperature Rt2, the next applied temperature At falls within a second determination temperature range equal to or greater than the second reference temperature Rt2 and less than the third reference temperature Rt3, and a subsequent applied temperature At falls within a third determination temperature range equal to or greater than the third reference temperature Rt3. Here, the first determination temperature range < second determination temperature range < third determination temperature range. Such a sequential procedure ensures that the temperature At included in the analysis information is not affected by external noise, thereby enabling the control part 30 to control heating operations using more accurate temperatures At.

As described above, the temperature determination region of the sound analysis part 20 includes a temperature region that overlaps with each of the first to third determination temperature ranges.

Additionally, as in the above-described step S13, if the temperature At included in the analysis information is a temperature (e.g., the second reference temperature Rt2 or the third reference temperature Rt3) that exceeds the first determination temperature range which is equal to or greater than the first reference temperature Rt1 and less than the second reference temperature Rt2, this means that the sound signal captured by the microphone 18 contains noise, and the control part 30 therefore discards the temperature At included in the analysis information. In step S17, if the temperature At included in the analysis information is a temperature (e.g., the third reference temperature Rt3) that exceeds the second determination temperature range, the control part 30 discards the temperature At included in the analysis information.

In another embodiment, the control part 30 discards the temperature At included in the analysis information in steps S13 and S17. If this discarding process is performed consecutively a preset number of times (e.g., five times) or more, it may indicate that the surrounding environment of the heating cooking system makes it difficult to determine temperature using sound. If the discarding process is performed consecutively the preset number of times or more, the control part 30 visually or audibly displays a notification via the display 12 indicating the turn-off of the boil-over prevention function (e.g., "Unable to accurately detect boiling, the function will be turned off") and then turns off the boil-over prevention function. Additionally, when turning off the boil-over prevention function, the control part 30 may either control the heating part 16 to operate at the current heating power level or control the heating part 16 to operate at a lower heating power level than the current heating power level, and may also visually or audibly display a heating power reduction notification via the display 12 (e.g., "Unable to accurately detect boiling, heating power will be adjusted and the function will be turned off").

Additionally, in each of the above-described steps S13, S17, and S21, if the analysis information includes only one temperature, as in the first and second embodiments of the analysis information described above, the temperature At included in the analysis information is that temperature.

Alternatively, in each of the above-described steps S13, S17, and S21, if the analysis information includes one temperature and the match rate of that temperature, as in the first embodiment of the analysis information described above, the temperature At included in the analysis information is a temperature with a match rate equal to or greater than a reference match rate.

Alternatively, in each of the above-described steps S13, S17, and S21, in the third embodiment of the analysis information described above, a temperature with the highest match rate or a temperature with a match rate equal to or greater than the reference match rate is used as the temperature At included in the analysis information. Alternatively, if the match rate of one temperature is equal to or greater than the reference match rate and the match rates of the other temperatures are equal to or less than the lowest match rate (e.g., 10%), the temperature with a match rate equal to or greater than the reference match rate is the temperature At included in the analysis information.

As explained above, the present disclosure is not limited to the specific preferred embodiments described above. Various modifications may be made by those skilled in the art without departing from the scope of the claims, and sch modifications are within the scope of the claims.

### [DETAILED DESCRIPTION OF MAIN ELEMENTS]

| | | | |
|---|---|---|---|
| 10: | Input part | 12: | Display |
| 16: | Heating part | 18: | Microphone |
| 20: | Sound analysis part | 30: | Control part |

## Claims

1. A heating cooking system including a main body with a receiving space and a top plate that covers an upper side of the receiving space, the heating cooking system comprising:
a display;
an input part;
a power supply part that receives external power and applies the same to the heating part and the control part;
the heating part that heats cookware placed on the top plate under the control of the control part;
a microphone that captures sound and applies a sound signal to a sound analysis part;
the sound analysis part that infers temperatures from the sound signal applied from the microphone, makes analysis information include at least one of the inferred temperatures and applies the same to the control part; and
the control part that controls the heating part to start a heating operation at a first heating power level in response to a selection input from the input part, receives the analysis information from the sound analysis part,
wherein the control part performs a boil-over prevention function to control the display or the heating part using the analysis information, upon first receiving the analysis information including a temperature that falls within a first determination temperature range which is lower than a second determination temperature range.

2. The heating cooking system of claim 1, wherein, with respect to the boil-over prevention function, the control part controls the heating part to perform a heating operation at a second heating power level which is lower than the first heating power level, upon receiving the analysis information including a temperature that falls within the second determination temperature range which is lower than a third determination temperature range, after first receiving the analysis information including a temperature that falls within the first determination temperature range which is lower than the second determination temperature range.

3. The heating cooking system of claim 2, wherein, with respect to the boil-over prevention function, the control part controls the heating part to perform a heating operation at a third heating power level which is lower than the second heating power level, upon receiving the analysis information including a temperature that falls within the third determination temperature range, after receiving the analysis information including a temperature that falls within the second determination temperature range which is lower than the third determination temperature range.

4. The heating cooking system of claim 3, wherein the sound analysis part applies the analysis information to the control part only when the at least one temperature is included in a temperature determination region, and
wherein the temperature determination region includes a temperature region that overlaps with each of the first to third determination temperature ranges.

5. The heating cooking system of claim 3, wherein the at least one temperature is one temperature, and the sound analysis part infers the match rates between the sound signal and the inferred temperatures and includes the temperature with the highest match rate in the analysis information.

6. The heating cooking system of claim 3, wherein the at least one temperature includes one temperature, and the analysis information includes the one temperature and the match rate between the sound signal and the one temperature, and
wherein the sound analysis part infers the match rates between the sound signal and the inferred temperatures, and applies to the control part the analysis information including a temperature with a match rate equal to or greater than a reference match rate.

7. The heating cooking system of claim 3, wherein the at least one temperature includes one temperature, and the analysis information includes the one temperature and the match rate between the sound signal and the one temperature, and
wherein the control part performs the boil-over prevention function using the analysis information only when the match rate is equal to or greater than a reference match rate.

8. The heating cooking system of claim 3, wherein the at least one temperature includes a plurality of temperatures, the analysis information includes the plurality of temperatures and the match rates between the plurality of temperatures and the sound signal, and the control part performs the boil-over prevention function using a temperature with the highest match rate or a temperature with a match rate equal to or greater than a reference match rate, among the plurality of temperatures.

9. The heating cooking system of claim 3, wherein the at least one temperature includes a plurality of temperatures, the analysis information includes the plurality of temperatures and the match rates between the plurality of temperatures and the sound signal, and if the match rate of one of the plurality of temperatures is equal to or greater than a reference match rate and the match rates of the other temperatures are equal to or less than the lowest match rate, the control part performs the boil-over prevention function using a temperature with a match rate equal to or greater than the reference match rate.

10. The heating cooking system of claim 1, wherein, if the temperature included in the analysis information is a temperature that exceeds the first determination temperature range, the control part discards the temperature included in the analysis information.

11. The heating cooking system of claim 2, wherein, if the temperature included in the analysis information is a temperature that exceeds the second determination temperature range, the control part discards the temperature included in the analysis information.

12. The heating cooking system of claim 10 or 11, wherein, if the discarding is performed consecutively a preset number of times or more, the control part turns off the boil-over prevention function.

13. The heating cooking system of claim 12, wherein, when turning off the boil-over prevention function, the control part controls the heating part to operate at a lower heating power level than the current heating power level of the heating part.

14. The heating cooking system of claim 1, wherein the selection input from the input part is a selection input for the boil-over prevention function, and
wherein the first heating power level is a maximum output.

15. The heating cooking system of claim 1, wherein the selection input from the input part is a selection input for the heating power level, the control part performs a general heating function to start a heating operation by controlling the heating part to operate at a heating power level corresponding to the selection input for the heating power level, and upon capturing a selection input for the boil-over prevention function from the input part during the performing of the general heating function, the control part performs the boil-over prevention function.
